# EUROPÄISCHE PATENTSCHRIFT

(11) **EP 4 399 421 B1**
(45) Veröffentlichungstag und Bekanntmachung des Hinweises auf die Patenterteilung: **09.07.2025**
(21) Anmeldenummer: 22761387.4
(22) Anmeldetag: 19.08.2022
(51) Int. Cl.: F16H 57/04

(54) **PLANETENGETRIEBE SOWIE SCHMIERMITTELFANGSCHALE FÜR EIN PLANETENGETRIEBE**
PLANETARY GEARBOX AND LUBRICANT-COLLECTING TRAY FOR A PLANETARY GEARBOX
BOÎTE DE VITESSES À TRAINS PLANÉTAIRES ET PLATEAU COLLECTEUR DE LUBRIFIANT POUR UNE BOÎTE DE VITESSES À TRAINS PLANÉTAIRES

(30) Priorität: 07.09.2021 DE 102021123097
(43) Veröffentlichungstag der Anmeldung: 17.07.2024
(73) Patentinhaber: Schaeffler Technologies AG & Co. KG, 91074 Herzogenaurach (DE)
(72) Erfinder: HEYMEL, Jan, 91056 Erlangen (DE); HOCK, Alfred, 91315 Höchstadt / Aisch (DE); FISCHER, Frederic, 91085 Weisendorf (DE); BOEHM, Florian, 91227 Leinburg (DE); SAUER, Dominik, 96175 Pettstadt (DE)
(86) Internationale Anmeldenummer: PCT/DE2022/100616
(87) Internationale Veröffentlichungsnummer: WO 2023/036361

(56) Entgegenhaltungen:
- DE-A1- 102005 054 084
- DE-B3- 102019 121 079
- US-A1- 2009 247 347

## Beschreibung

Die Erfindung betrifft ein Planetengetriebe, umfassend eine Welle mit einer Kanalstruktur zum Führen eines Schmiermittels, umfassend einen an der Außenseite der Welle mündenden Kanal, einen Planetenträger, wenigstens zwei am Planetenträger angeordnete Planetenbolzen, auf denen jeweils ein Planetenrad gelagert ist, wobei jeder Planetenbolzen eine Kanalstruktur zum Zuführen des Schmiermittels zur Lagerung des Planetenrads aufweist, sowie eine einen Sammelraum aufweisende Schmiermittelfangschale zum Einfangen des über den wellenseitigen Kanal zugeführten Schmiermittels umfassend wenigstens zwei, jeweils in einer planetenbolzenseitigen Kanalstruktur mündende, hohle Zuführstutzen zum Zuführen des Schmiermittels in die jeweilige Kanalstruktur.

Planetengetriebe kommen in unterschiedlichsten Anwendungen zum Einsatz. Ein Beispiel sind Kraftfahrzeuggetriebe wie beispielsweise Hybridgetriebe. Auf an einem Planetenträger angeordneten Planetenbolzen sind Planetenräder über geeignete Lagerungen, zumeist Wälzlager in Form von Nadellagern, drehgelagert, wobei die Planetenräder in an sich bekannter Weise mit einem Hohlrad kämmen. Um den Lagerungen der Planetenräder ein Schmiermittel zuzuführen, ist eine entsprechende Schmiermittelvorrichtung respektive Schmiermittelversorgung vorgesehen. Diese umfasst zum einen eine an der zentralen Welle vorgesehene Kanalstruktur, beispielsweise mit einem längs der Wellenachse verlaufenden Kanal, von dem radial ein weiterer Kanal abgeht, der an der Wellenaußenseite mündet. Vorgesehen ist des Weiteren eine Schmiermittelfangschale, die einen Sammelraum für das über den Kanal zugeführte, aus diesem austretende Schmiermittel aufweist, in dem also das Schmiermittel eingefangen wird. Von einem Boden der Fangschale erstrecken sich, der Anzahl der Planetenbolzen entsprechend, Zuführstutzen, die einerseits mit dem Sammelraum kommunizieren, und andererseits mit jeweils einer Kanalstruktur, die in jedem Planetenbolzen vorgesehen ist. Über den jeweiligen Zuführstutzen wird der planetenbolzenseitigen Kanalstruktur das aus dem Sammelraum kommende Schmiermittel zugeführt, das über die bolzenseitige Kanalstruktur zur Lagerung geführt wird.

Ein Beispiel eines derartigen Planetengetriebes geht aus der DE 10 2008 000 900 A1 hervor. Die Welle ist im einem zentralen Kanal zum Führen von Schmieröl versehen, von dem aus quer ein Kanal in einen Spalt zwischen Zahnrädern und einem Planetenträger führt. Das Schmieröl fließt von dem Spalt aus über ein Axiallager zu einer Schmiermittelfangschale. Der Sammelraum dieser Schmiermittelfangschale folgt radial auf ein Leitblech, welches zugleich auch eine Laufbahn für die Nadeln des Axiallagers aufweist. Die Schmiermittelfangschale weist eine der Anzahl der Planetenbolzen des Planetengetriebes entsprechende Anzahl an Zuführstutzen auf, von denen jeder in einer Bohrung eines Planetenbolzens steckt. Die Zuführstutzen gehen von einem rinnenförmigen Sammelraum der Schmiermittelfangschale ab, welche axial zum Planetenträger hin durch eine so genannte Dichtscheibe und den Zuführstutzen gegenüber liegend durch eine Deckscheibe begrenzt ist, so dass das Schmieröl in dem durch die Dichtscheibe und die Deckscheibe begrenzten Sammelraum aufgefangen wird. Die Öffnungen der Zuführstutzen münden an der Dichtscheibe in die Schmiermittelfangschale und liegen innerhalb des Sammelraums, so dass das darin gesammelte Schmieröl über die Zuführstutzen zu den Planetenlagern geleitet werden kann.

Aus der DE 10 2016 206 745 A1 geht ein Planetengetriebe hervor, in dem zwei axial aufeinander folgende Planetensätze mittels ein und derselben Schmiermittelfangschale mit Schmieröl versorgt werden können. Die zu dem weiteren Planetensatz weisende Deckscheibe der Schmiermittelfangschale weist dafür Durchgangsöffnungen auf, die in etwa auf dem Niveau der an dem Sammelraum gegenüber liegenden Öffnungen der Zuführstutzen liegen. Das in dem Sammelraum gesammelte Schmieröl gelangt dadurch anteilig sowohl durch die Zuführstutzen zu den Planetenlagern des einen Planetensatzes als auch über die Durchgangslöcher zu dem anderen Planetensatz.

Ein weiterer Planetentrieb geht aus der DE 10 2018 123 592 A1 hervor, dessen Planetenlager, sobald der Planetenträger rotiert, bevorzugt durch Schöpfen mittels einer Schmiermittelfangschale aus einem Ölsumpf mit Schmieröl versorgt werden soll. Der Sammelraum der dort wirksamen Schmiermittelfangschale ist in Umfangsrichtung durch Trennwände getrennt. Die Trennwände teilen den Sammelraum in eine der Anzahl der Zuführstutzen entsprechende Anzahl an Sammelabschnitten auf. Die Trennwände sind so an den Öffnungen des jeweiligen Zuführstutzens positioniert, dass die Öffnung auch bei Umkehr der Rotationsrichtung des Planetenträgers optimal mit Schmieröl versorgt werden kann.

Häufig weist die Kanalstruktur der Welle nur einen radial laufenden, wellenaußenseitig mündenden Kanal auf, über den das Schmiermittel, üblicherweise ein Öl, nach außen abgegeben wird. Das Schmiermittel wird demzufolge nur an einer Stelle lokal ausgebracht, das heißt, dass um den Wellenumfang gesehen keine gleichmäßige Verteilung gegeben ist. Dies führt dazu, dass auch im Sammelraum, gesehen um den Umfang, keine homogene Schmiermittelverteilung gegeben ist, was wiederum dazu führt, dass der Schmiermittelzustrom zu den einzelnen Zuführstutzen aufgrund dieser Inhomogenität ebenfalls nicht gleichmäßig ist. Aufgrund der festen Lagebeziehung der Schmiermittelfangschale einerseits zum Planetenträger respektive dem Planetenbolzen und andererseits zur Welle sammelt sich in dem Bereich des Sammelraums, der benachbart respektive unmittelbar in Verlängerung des wellenseitigen Kanals liegt, mehr Schmiermittel an als in in Umfangsrichtung versetzten Bereichen und insbesondere dem gegenüberliegenden Bereich. Dies führt wiederum dazu, dass dem Zuführstutzen, der, gesehen in Umfangsrichtung, am nächsten zur Mündung des wellenseitigen Kanals positioniert ist, eine größere Schmiermittelmenge zugeführt wird als den in Umfangsrichtung versetzt dazu angeordnete Zuführstutzen. Zwar könnte man der inhomogenen Schmiermittelabgabe über die Welle dadurch entgegenwirken, dass um den Wellenumfang gesehen mehrere radial laufende Kanäle vorgesehen sind, so dass in Umfangsrichtung gesehen an mehreren Positionen das Schmiermittel abgegeben wird. Idealerweise entspräche die Anzahl an Kanälen der Anzahl an Zuführstutzen und damit an Planetenbolzen. Nicht zuletzt aus Festigkeitsgründen in Bezug auf die Welle ist die Ausbildung mehrerer solcher Kanäle jedoch nicht immer zweckmäßig, weshalb oft eben nur ein radial laufender Kanal vorgesehen ist. Die inhomogene Schmiermittelzufuhr äußert sich in einer unterschiedlich guten Schmierung der jeweiligen Lagerungen, was sich in einem unterschiedlichen Temperaturverhalten der Planetenbolzen zeigt.

Die US 2009/ 247 347 A1 zeigt eine Schmiervorrichtung für ein Planetenbolzen eines Planetengetriebes.

Der Erfindung liegt damit die Aufgabe zugrunde, ein demgegenüber verbessertes Planetengetriebe anzugeben.

Zur Lösung dieser Aufgabe ist bei einem Planetengetriebe der eingangs genannten Art erfindungsgemäß vorgesehen, dass ein in Umfangsrichtung gesehen näher zur Mündung des Kanals positionierter Zuführstutzen einen kleineren Öffnungsquerschnitt als ein weiter entfernt positionierter Zuführstutzen aufweist.

Erfindungsgemäß zeichnen sich die an der Schmiermittelfangschale vorgesehenen Zuführstutzen durch unterschiedliche Öffnungsquerschnitte aus, wobei der jeweilige kleinere oder größere Öffnungsquerschnitt abhängig von der Position des Zuführstutzens relativ zur Mündung des einen wellenseitigen Kanals, gesehen in Umfangsrichtung, ist. Der Zuführstutzen, der in Umfangsrichtung gesehen am nächsten zur Mündung positioniert ist, wo sich wie beschrieben die größte Schmiermittelmenge ansammelt, weist einen kleineren Öffnungsquerschnitt und damit Strömungsquerschnitt auf, als ein, gesehen in Umfangsrichtung, weiter entfernt positionierter Zuführstutzen. In Umfangsrichtung verteilt sind wenigstens zwei Zuführstutzen vorgesehen, zumeist aber mehr, beispielsweise drei oder mehr Zuführstutzen, natürlich entsprechend der Anzahl an Planetenbolzen und Planetenrädern. Durch die quasi positionsabhängige Änderung respektive Einstellung der Öffnungs- bzw. Strömungsquerschnitte der einzelnen Zuführstutzen kann folglich auf die Inhomogenität hinsichtlich der im Sammelraum, gesehen in Umfangsrichtung, vorhandenen Schmiermittelmenge reagiert werden. Denn dem der Mündung am nächsten liegenden Zuführstutzen wird, da er den kleinen oder kleinsten Öffnungs- oder Strömungsquerschnitt aufweist, weniger Schmiermittel zugeführt, so dass weniger Schmiermittel zur Lagerstelle gelangt, während dem oder den in Umfangsrichtung entfernt liegenden Zuführstutzen mehr Schmiermittel zugeführt wird, so dass den zugeordneten Lagerungen etwas mehr Schmiermittel zugeführt wird als über den benachbart positionierten Zuführstutzen.

Insgesamt ist die Auslegung respektive Variation der Öffnungs- oder Strömungsquerschnitte der Zuführstutzen natürlich so gewählt, dass im Betrieb jedem Planetenbolzen und damit jeder Lagerung näherungsweise gleich viel Schmiermittel zugeführt wird, so dass trotz der gegebenen Inhomogenität seitens der Schmiermittelsammlung eine homogene Schmierung erreicht wird.

Sind beispielsweise drei Zuführstutzen vorgesehen, so wird zweckmäßigerweise der Zuführstutzen mit dem kleinsten Öffnungs- oder Strömungsquerschnitt quasi in radialer Verlängerung des Kanals respektive der Mündung positioniert, während die beiden anderen Zuführstutzen einen etwas größeren Öffnungs- oder Strömungsquerschnitt aufweisen und um 120° versetzt zum ersten Zuführstutzen positioniert sind. Sie weisen aber, aufgrund des gleichen Winkelversatzes, den gleichen Öffnungsquerschnitt auf. Sind beispielsweise vier Zuführstutzen vorgesehen, so ist wiederum ein erster, den kleinsten Öffnungsquerschnitt aufweisender Zuführstutzen in radialer Verlängerung des Kanals positioniert, zwei weitere, einen größeren, aber beide den gleichen Öffnungsquerschnitt aufweisende Zuführstutzen sind um 90° versetzt positioniert, während ein vierter Zuführstutzen um 180° versetzt positioniert ist, der dann schließlich den größten Strömungsquerschnitt aufweist. Dies bildet den Umstand ab, dass um den Umfang gesehen unmittelbar benachbart zur Kanalmündung letztlich die größte Schmiermittelmenge vorliegt, während im um 180° gegenüberliegenden Bereich die geringste Schmiermittelmenge vorhanden ist.

Die Variation des Öffnungsquerschnitts kann auf unterschiedliche Weise erfolgen. So kann gemäß einer ersten Erfindungsvariante jeder Zuführstutzen eine Bohrung aufweisen, wobei der Bohrungsdurchmesser der einzelnen Zuführstutzen zur Variation des Öffnungsquerschnitts unterschiedlich ist. Die Zuführstutzen, die bevorzugt hohlzylindrisch sind, da sie in der Montagestellung in die Bolzenbohrungen eingreifen, weisen eine zylindrische Bohrung auf, wobei zur Variation des Öffnungsquerschnitts auf einfache Weise der Bohrungsdurchmesser variiert werden kann. Hier wird also der Öffnungs- oder Strömungsquerschnitt über den Innendurchmesser gesteuert.

In einer Alternative kann auch ein oder können mehrere Zuführstutzen eine den Öffnungsquerschnitt verringernde, vorzugsweise am zum Sammelraum offenen Ende des Zuführstutzens vorgesehene, Blende aufweisen. Hier wird über eine geometrische Querschnittsverringerung in Form einer Blende die Querschnittsvariation vorgenommen, das heißt, dass hier eine Blendensteuerung gegeben ist. Die Blende, die mehr oder weniger weit in die wiederum bevorzugt hohlzylindrische Bohrung des jeweiligen Zuführstutzens einragt, befindet sich dabei zweckmäßigerweise im Übergang zum Sammelraum, könnte aber auch am anderen Ende positioniert werden.

Weiterhin ist es denkbar, dass der Planetenträger eine sich radial zur Welle erstreckende Wange aufweist, mit der er mit der Welle verbunden ist und an die sich ein ringförmiger Boden, an dem die Zuführstutzen axial abstehen, anschließt. Auf diese Weise kann eine einfache Verbindung des Planetenträgers zur Welle erfolgen, während gleichzeitig aufgrund des Übergangs der Wangenfläche zum Schalenboden auch das Schmiermittel über diese Wange entsprechend geführt werden kann. Dabei kann in Weiterbildung der Erfindung die Wange an der zur Schmiermittelfangschale weisenden Seite eine Schmiermittelleitstruktur aufweisen. Beispielsweise ist die Wange, im Querschnitt gesehen, beginnend am Innenumfang gekröpft ausgeführt, so dass sich eine entsprechende Winkelstruktur ergibt, über die das Schmiermittel geführt werden kann.

Gemäß einer zweckmäßigen Weiterbildung der Erfindung kann vorgesehen sein, dass der ringförmige Sammelraum im Bereich des einen kleineren Öffnungsquerschnitt aufweisenden Zuführstutzens in radialer Richtung breiter ist als im Bereich eines einen größeren Öffnungsquerschnitt aufweisenden Zuführstutzens. Demgemäß ist also der Sammelraum in Umfangsrichtung gesehen asymmetrisch, weil er sich lokal unterschiedlich weit radial ausdehnt. Im Bereich des Zuführstutzens mit dem kleineren Öffnungsquerschnitt ist folglich ein etwas größeres Ölreservoir gegeben als an anderen Stutzenpositionen, wo mehr Öl über die Zuführstutzen abgeführt wird. Alternativ zur radialen Variation ist es auch denkbar, den Sammelraum zur lokalen Variation in axialer Richtung etwas höher oder niedriger auszuführen. Auch hierüber kann eine asymmetrische Auslegung erreicht werden.

Neben dem Planetengetriebe selbst betrifft die Erfindung ferner eine Schmiermittelfangschale für ein Planetengetriebe der vorgestehend beschriebenen Art. Die Schmiermittelfangschale weist einen über einen Boden begrenzten Sammelraum sowie wenigstens zwei von dem Boden axial abragende, mit dem Sammelraum kommunizierende, hohle Zuführstutzen auf. Sie ist dadurch gekennzeichnet, dass die Zuführstutzen zumindest zum Teil unterschiedliche Öffnungsquerschnitte aufweisen.

Dabei können die Zuführstutzen jeweils eine Bohrung aufweisen, wobei die Bohrungsdurchmesser zur Variation des Öffnungsquerschnitts unterschiedlich sind. Alternativ hierzu kann auch eine oder können mehrere Zuführstutzen eine den Strömungsquerschnitt verringernde, vorzugsweise am zum Sammelraum offenen Ende des Zuführstutzens vorgesehene, Blende aufweisen. Beide Alternativen lassen auf einfache Weise eine entsprechende Variation des Öffnungs- bzw. Strömungsquerschnitts zu.

Schließlich kann der ringförmige Sammelraum im Bereich des einen kleineren Öffnungsquerschnitt aufweisenden Zuführstutzens in radialer Richtung breiter oder in axialer Richtung höher sein als im Bereich eines einen größeren Öffnungsquerschnitt aufweisenden Zuführstutzens.

Die Erfindung wird nachfolgend anhand von Ausführungsbeispielen unter Bezugnahme auf die Zeichnungen erläutert. Die Zeichnungen sind schematische Darstellungen und zeigen:
- Figur 1: eine Prinzipdarstellung eines erfindungsgemäßen Planetengetriebes in einer Schnittansicht in einer ersten Schnittebene, die durch den wellenseitigen Kanal und einen in dieser Schnittebene liegenden Zuführstutzen der Schmiermittelfangschale läuft,
- Figur 2: das Planetengetriebe aus Figur 1 in einer Schnittansicht längs einer im Beispiel um 120° versetzten Schnittebene, die durch einen zum Zuführstutzen aus Figur 1 um 120° versetzten Zuführstutzen läuft, und
- Figur 3: eine Prinzipdarstellung eines erfindungsgemäßen Planetengetriebes einer zweiten Ausführungsform in einer Schnittansicht, die, entsprechend Figur 1, wiederum durch den Kanal sowie den hierzu radial benachbarten Zuführstutzen läuft, dessen Öffnungsquerschnitt über eine Blende verringert ist.

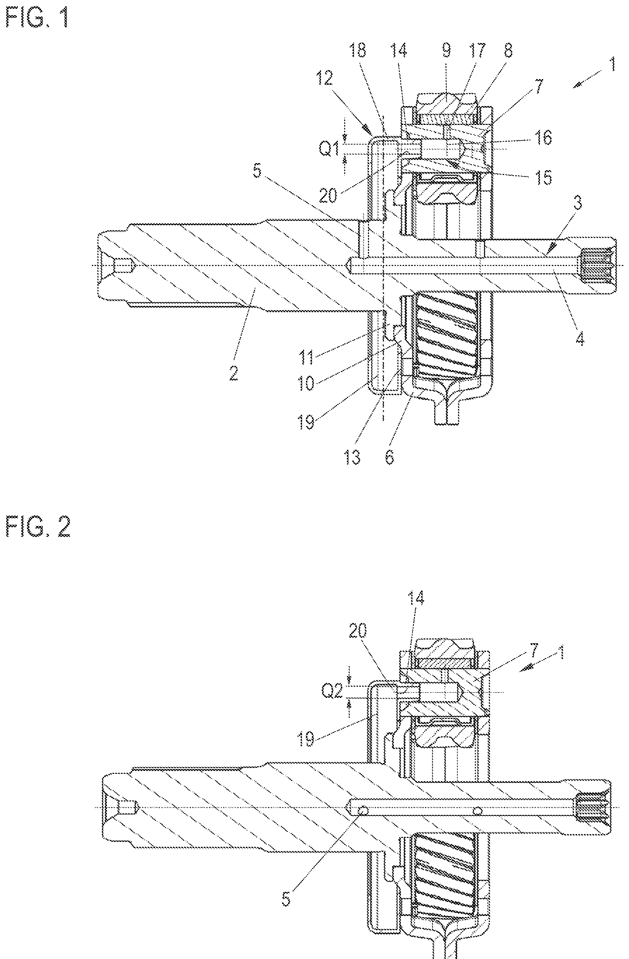

Figur 1 zeigt in einer Prinzipdarstellung ein erfindungsgemäßes Planetengetriebe 1, umfassend eine Welle 2 mit einer Kanalstruktur 3 bestehend aus einem axial verlaufenden Kanal 4 sowie einem davon radial abgehenden Kanal 5, der an der Außenseite der Welle 2 mündet. Über diese Kanalstruktur 3 kann von axial kommend ein Schmiermittel zugeführt werden.

Vorgesehen ist des Weiteren ein Planetenträger 6, an dem mehrere, im gezeigten Beispiel drei, Planetenbolzen 7 angeordnet sind, wobei auf jedem Planetenbolzen 7 über eine Lagerung 8 in Form eines Wälzlagers ein Planetenrad 9 angeordnet ist. Der Planetenträger 6 weist an einer Seite eine Wange 10 auf, über die er an einem Flansch 11 der Welle 2 befestigt ist. Der Flansch 11 ist gekröpft, also gewinkelt ausgeführt. Über diese gekröpfte oder gewinkelte Struktur wird eine Schmiermittelleitstruktur gebildet, über die das Schmiermittel, wie nachfolgend noch beschrieben wird, gezielt geführt werden kann.

Vorgesehen ist des Weiteren auch eine bevorzugt aus Kunststoff gefertigte Schmiermittelfangschale 12, die ringförmig ist und die einen Boden 13 aufweist, von dem axial drei, der Anzahl an Planetenbolzen 7 entsprechend, hohle Zuführstutzen 14 abragen. Jeder hohle Zuführstutzen 14 greift in eine Kanalstruktur 15 des jeweiligen Planetenbolzens 7 ein, die einen axial verlaufenden Kanal 16 sowie einen davon radial abgehenden und unterhalb der Lagerung 8 mündenden Kanal 17 umfasst.

Die Schmiermittelfangschale 12 weist des Weiteren einen Schalenrand 18 auf, der sich axial vom Boden 13 erstreckt und sodann radial nach innen gezogen ist, so dass über ihn in Verbindung mit dem Boden 13 ein umlaufender Sammelraum 19 gebildet wird. Die Schmiermittelfangschale 12 ist axial gesehen offen, so dass aus dem Kanal 5 austretendes Schmiermittel in die Schmiermittelfangschale 12 eintreten kann und im Sammelraum 19 aufgefangen werden kann. Axial gesehen ist die Anordnung letztlich geschlossen, da die Wange 10 an den Boden 13 anschließt, so dass eine Schmiermittelführung gegeben ist. Offen ist die Schmiermittelfangschale 12 lediglich zu den Planetenbolzen 7 über die hohlen Zuführstutzen 14.

Der in der Schnittansicht gemäß Figur 1 gezeigte Zuführstutzen 14 befindet sich quasi in radialer Verlängerung respektive in der gleichen Ebene wie die Mündung des Kanals 5. Der Zuführstutzen 14 weist eine zylindrische Bohrung 20 auf, die einen ersten Innendurchmesser aufweist, über den ein erster Öffnungsquerschnitt Q1, der auch als Strömungsquerschnitt bezeichnet werden kann, definiert wird. Dieser Öffnungsquerschnitt Q1 ist ein kleiner bzw., gesehen über alle Zuführstutzen 14, der kleinste Öffnungsquerschnitt aller Zuführstutzen. Dies deshalb, als sich in diesem Bereich der Schmiermittelsammelschale 12 bzw. des Sammelraums 19 das meiste Schmiermittel sammelt, da dieser Bereich unmittelbar benachbart zur Mündung des Kanals 5 liegt.

Figur 2 zeigt das Planetengetriebe aus Figur 1 in einer weiteren Schnittansicht, die hier, bei drei Planetenbolzen 7, um 120° versetzt zur Schnittebene aus Figur 1 liegt. Die Schnittansicht verläuft durch einen zweiten Zuführstutzen 14, der in dem entsprechenden Planetenbolzen 7, der zum Planetenbolzen 7 aus Figur 1 zwangsläufig ebenfalls um 120° versetzt positioniert ist, mündet. Der hohle Zuführstutzen 14 weist auch hier eine zylindrische Bohrung 20 auf, deren Innendurchmesser jedoch etwas größer als der Innendurchmesser der Bohrung 20 des Zuführstutzens 14 aus Figur 1. Dies führt dazu, dass der Zuführstutzen 14 aus Figur 2 einen etwas größeren Öffnungsquerschnitt Q2 aufweist als der Zuführstutzen 14 aus Figur 1 mit seinem Öffnungsquerschnitt Q1. Das heißt, dass über den Zuführstutzen 14 aus Figur 2 etwas mehr Schmiermittel aus dem Sammelraum 19 in den Planetenbolzen 7 geführt werden kann, als über den Zuführstutzen 14 aus Figur 1 mit seinem kleineren Öffnungsquerschnitt Q1. Hierüber kann dem Umstand Rechnung getragen werden, dass sich in dem dem Zuführstutzen 14 aus Figur 2 benachbarten Bereich des Sammelraums 19 etwas weniger Schmiermittel ansammelt als im Sammelraumbereich, der dem Zuführstutzen aus Figur 1 gegenüberliegt, nachdem der Zuführstutzen 14 aus Figur 2 wie beschrieben um 120° versetzt zum Zuführstutzen 14 aus Figur 1 und damit aber auch zur Mündung des in Figur 2 angedeuteten Kanals 5 liegt.

Durch diese unterschiedlichen Öffnungsquerschnitte Q1 und Q2 kann sichergestellt werden, dass auch über die in Umfangsrichtung zur Mündung des Kanals 5 versetzt angeordneten Zuführstutzen 14 den jeweiligen Planetenbolzen 7 und damit den Lagerungen 8 eine ausreichende Schmiermittelmenge zugeführt werden kann, nachdem dem unmittelbar der Mündung des Kanals 5 benachbarten Planetenbolzen 7 eine reduzierte Menge zugeführt wird. Das heißt, dass die Inhomogenität respektive Ungleichheit der sich im Sammelraum 19 ansammelnden Schmiermittelmenge über die unterschiedlichen Öffnungsquerschnitte kompensiert werden kann.

Die Figuren 1 und 2 zeigen eine Variation der Öffnungsquerschnitte über unterschiedliche Innendurchmesser der hohlzylindrischen Bohrungen 20, wobei der Innendurchmesser umso größer ist, je weiter entfernt in Umfangsrichtung gesehen der jeweilige Zuführstutzen 14 zur Mündung des Kanals 5 positioniert ist.

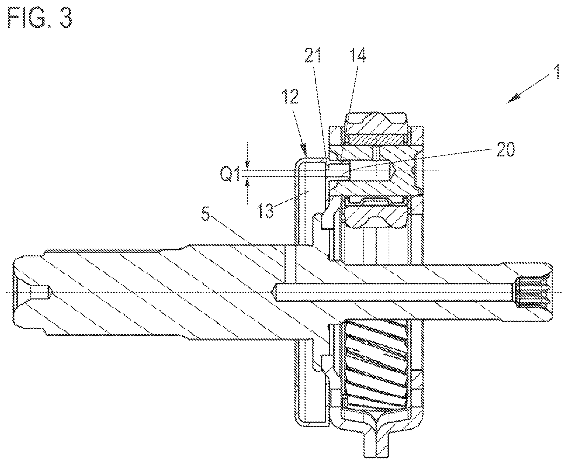

Figur 3 zeigt demgegenüber eine Ausgestaltung eines erfindungsgemäßen Planetenradgetriebes 1 einer zweiten Ausführungsform. Der grundsätzliche Aufbau ist identisch zur Ausführungsform gemäß der Figuren 1 und 2, weshalb auf die diesbezüglichen Ausführungen verwiesen wird, lediglich die Ausgestaltung der Schmiermittelfangschale 12 im Bereich der Zuführstutzen 14 zur Variation der Öffnungsquerschnitte ist etwas anders. Gezeigt ist hier wiederum eine Schnittansicht in einer Ebene, die der aus Figur 1 entspricht. Das heißt, dass die Schnittebene durch den Kanal 5 sowie den radial benachbart liegenden Zuführstutzen 14 läuft. Auch dieser weist eine hohlzylindrische Bohrung 20 auf. Diese ist aber über eine Blende 21, die sich quasi radial in die Bohrung 20 erstreckt, in ihrem Querschnitt geringfügig reduziert. Die Blende 21 befindet sich im Übergang zum Sammelraum 13. Über diese Blende 21 wird der Öffnungsquerschnitt eingeschnürt, das heißt, dass wiederum ein kleinerer Öffnungsquerschnitt Q1 gegeben ist. Dieser ist kleiner als ein Öffnungsquerschnitt Q2, den ein Zuführstutzen 14 aufweist, der in Umfangsrichtung versetzt positioniert ist. Die Schnittansicht gemäß Figur 2 kann in gleicher Weise bezüglich Figur 3 gesehen werden und eine Schnittansicht durch das Planetengetriebe aus Figur 3 in einer um 120° verdrehten Schnittebene zeigen. Der um 120° versetzt positionierte Zuführstutzen 14 ist nicht über eine Blende in seinem Öffnungsquerschnitt eingeschnürt, weist also den größeren Öffnungsquerschnitt Q2 auf.

Bei dieser Ausgestaltung erfolgt demzufolge eine Variation des jeweiligen Öffnungsquerschnitts über vorgesehene Blenden, die den Bohrungsdurchmesser entsprechend einschnüren.

Im gezeigten Beispiel sind nur drei Planetenräder und demzufolge nur drei Planetenbolzen 7 vorgesehen, folglich auch nur drei Zuführstutzen 14. Selbstverständlich können auch beispielsweise vier oder fünf Planetenräder 9 und demzufolge Planetenbolzen 7 und Zuführstutzen 14 vorgesehen sein, die dann in entsprechender Teilung um den Umfang verteilt positioniert sind. Auch in solchen Fällen gilt, dass der Zuführstutzen 14, der in Umfangsrichtung gesehen am nächsten oder bevorzugt in radialer Verlängerung der Mündung des Kanals 5 der Welle 2 ist, den kleinsten Öffnungsquerschnitt aufweist, wobei der Öffnungsquerschnitt zunimmt, je weiter entfernt die folgenden Zuführstutzen 14 von diesem ersten Zuführstutzen 14 positioniert sind.

### Bezugszeichenliste

- 1: Planetengetriebe
- 2: Welle
- 3: Kanalstruktur
- 4: axial verlaufender Kanal
- 5: radial abgehender Kanal
- 6: Planetenträger
- 7: Planetenbolzen
- 8: Lagerung
- 9: Planetenrad
- 10: Wange
- 11: Flansch
- 12: Schmiermittelfangschale
- 13: Boden
- 14: Zuführstutzen
- 15: Kanalstruktur
- 16: axial verlaufender Kanal
- 17: Kanal
- 18: Schalenrand
- 19: Sammelraum
- 20: Bohrung
- 21: Blende

- Q1, Q2: Öffnungsquerschnitt

## Patentansprüche

1. Planetengetriebe, umfassend eine Welle (2) mit einer ersten Kanalstruktur (3) zum Führen eines Schmiermittels, umfassend einen an der Außenseite der Welle (2) mündenden Kanal (5), einen Planetenträger (6), wenigstens zwei am Planetenträger (6) angeordnete Planetenbolzen (7), auf denen jeweils ein Planetenrad (9) gelagert ist, wobei jeder Planetenbolzen (7) eine zweite Kanalstruktur (15) zum Zuführen des Schmiermittels zur Lagerung (8) des Planetenrads (9) aufweist, sowie eine einen Sammelraum (19) aufweisende Schmiermittelfangschale (12) zum Einfangen des über den wellenseitigen Kanal (5) zugeführten Schmiermittels, umfassend wenigstens zwei, jeweils in einer planetenbolzenseitigen zweite Kanalstruktur (15) mündende, hohle Zuführstutzen (14) zum Zuführen des Schmiermittels in die jeweilige zweite Kanalstruktur (15), **dadurch gekennzeichnet, dass** ein in Umfangsrichtung gesehen näher zur Mündung des Kanals (5) positionierter Zuführstutzen (14) einen kleineren Öffnungsquerschnitt (Q1) als ein weiter entfernt positionierter Zuführstutzen (14) aufweist.

2. Planetengetriebe nach Anspruch 1, **dadurch gekennzeichnet, dass** die Zuführstutzen (14) jeweils eine Bohrung (20) aufweisen, wobei der Bohrungsdurchmesser zur Variation des Öffnungsquerschnitts (Q1, Q2) unterschiedlich ist.

3. Planetengetriebe nach Anspruch 1, **dadurch gekennzeichnet, dass** ein oder mehrere Zuführstutzen (14) eine den Öffnungsquerschnitt (Q1, Q2) verringernde und am zum Sammelraum (19) offenen Ende des Zuführstutzens (14) vorgesehene Blende (21) aufweisen.

4. Planetengetriebe nach einem der vorangehenden Ansprüche, **dadurch gekennzeichnet, dass** der Planetenträger (6) eine sich radial zur Welle (2) erstreckende Wange (10) aufweist, mit der er mit der Welle (2) verbunden ist und an die sich ein ringförmiger Boden (13), an dem die Zuführstutzen (14) axial abstehen, anschließt.

5. Planetengetriebe nach Anspruch 4, **dadurch gekennzeichnet, dass** die Wange (10) an der zur Schmiermittelfangschale (12) weisenden Seite eine Schmiermittelleitstruktur aufweist.

6. Planetengengetriebe nach einem der vorangehenden Ansprüche, **dadurch gekennzeichnet, dass** der ringförmige Sammelraum (19) im Bereich des einen kleineren Öffnungsquerschnitt (Q1) aufweisenden Zuführstutzens (14) in radialer Richtung breiter oder in axialer Richtung höher ist als im Bereich eines einen größeren Öffnungsquerschnitt (Q2) aufweisenden Zuführstutzens (14).

7. Schmiermittelfangschale für ein Planetengetriebe (1) nach einem der vorangehenden Ansprüche, umfassend einen über einen Boden (13) begrenzten Sammelraum (19) sowie wenigstens zwei von dem Boden (13) axial abragende, mit dem Sammelraum (19) kommunizierende, hohle Zuführstutzen (14), **dadurch gekennzeichnet, dass** die Zuführstutzen (14) zumindest zum Teil unterschiedliche Öffnungsquerschnitte (Q1, Q2) aufweisen.

8. Schmiermittelfangschale nach Anspruch 7, **dadurch gekennzeichnet, dass** die Zuführstutzen (14) jeweils eine Bohrung (20) aufweisen, wobei der Bohrungsdurchmesser zur Variation des Öffnungsquerschnitts unterschiedlich ist.

9. Schmiermittelfangschale nach Anspruch 7, **dadurch gekennzeichnet, dass** ein oder mehrere Zuführstutzen (14) eine den Strömungsquerschnitt verringernde und am zum Sammelraum (19) offenen Ende des Zuführstutzens (14) vorgesehene Blende (21) aufweisen.

10. Schmiermittelfangschale nach einem der Ansprüche 7 bis 9, **dadurch gekennzeichnet, dass** der ringförmige Sammelraum (19) im Bereich des einen kleineren Öffnungsquerschnitt (Q1) aufweisenden Zuführstutzens (14) in radialer Richtung breiter oder in axialer Richtung höher ist als im Bereich eines einen größeren Öffnungsquerschnitt (Q2) aufweisenden Zuführstutzens (14).

## Claims

1. A planetary gearbox, comprising a shaft (2) having a first channel structure (3) for guiding a lubricant, comprising a channel (5) which opens on the outside of the shaft (2), a planetary carrier (6), at least two planetary bolts (7) arranged on the planetary carrier (6), on each of which a planetary gear (9) is mounted, wherein each planetary bolt (7) has a second channel structure (15) for supplying the lubricant to the bearing (8) of the planetary gear (9), and a lubricant-collecting tray (12) having a collecting chamber (19) for collecting the lubricant supplied via the shaft-side channel (5), comprising at least two hollow feed nozzles (14), which each open into a second channel structure (15) on the planetary bolt-side for supplying the lubricant into the respective second channel structure (15), **characterized in that** a feed nozzle (14) positioned closer to the mouth of the channel (5) as viewed in the circumferential direction has a smaller opening cross-section (Q1) than a feed nozzle (14) positioned further away.

2. The planetary gearbox according to claim 1, **characterized in that** the feed nozzles (14) each have a bore (20), wherein the bore diameter differs in order to vary the opening cross-section (Q1, Q2).

3. The planetary gearbox according to claim 1, **characterized in that** one or more feed nozzles (14) have a diaphragm (21) which reduces the opening cross-section (Q1, Q2) and is provided at the end of the feed nozzle (14) which is open towards the collecting chamber (19).

4. The planetary gearbox according to any one of the preceding claims, **characterized in that** the planetary carrier (6) has a cheek (10) extending radially towards the shaft (2), via which the planetary carrier (6) is connected to the shaft (2) and which adjoins an annular base (13) on which the feed nozzles (14) axially project.

5. The planetary gearbox according to claim 4, **characterized in that** the cheek (10) has a lubricant guide structure on the side facing the lubricant-collecting tray (12).

6. The planetary gearbox according to any one of the preceding claims, **characterized in that** the annular collecting chamber (19) is wider in the radial direction or higher in the axial direction in the region of the feed nozzle (14) having a smaller opening cross-section (Q1) than in the region of a feed nozzle (14) having a larger opening cross-section (Q2).

7. A lubricant-collecting tray for a planetary gearbox (1) according to any one of the preceding claims, comprising a collecting chamber (19) delimited by a base (13) and at least two hollow feed nozzles (14) projecting axially from the base (13) and in communication with the collecting chamber (19), **characterized in that** the feed nozzles (14) have at least partially different opening cross-sections (Q1, Q2).

8. The lubricant-collecting tray according to claim 7, **characterized in that** the feed nozzles (14) each have a bore (20), wherein the bore diameter differs in order to vary the opening cross-section.

9. The lubricant-collecting tray according to claim 7, **characterized in that** one or more feed nozzles (14) have a diaphragm (21) which reduces the flow cross-section and is provided at the end of the feed nozzle (14) which is open towards the collecting chamber (19).

10. The lubricant-collecting tray according to any one of claims 7 to 9, **characterized in that** the annular collecting chamber (19) is wider in the radial direction or higher in the axial direction in the region of the feed nozzle (14) having a smaller opening cross-section (Q1) than in the region of a feed nozzle (14) having a larger opening cross-section (Q2).

## Revendications

1. Boîte de vitesses à trains épicycloïdaux, comprenant un arbre (2) comportant une première structure de canal (3) pour le guidage d'un lubrifiant, comprenant un canal (5) débouchant sur le côté extérieur de l'arbre (2), un porte-satellites (6), au moins deux goupilles planétaires (7) agencées sur le porte-satellites (6), sur lesquelles est logé respectivement un satellite (9), dans laquelle chaque goupille planétaire (7) présente une seconde structure de canal (15) pour l'alimentation du lubrifiant au palier (8) du satellite (9), ainsi qu'un plateau collecteur de lubrifiant (12) présentant un espace de collecte (19) pour collecter le lubrifiant alimenté par l'intermédiaire du canal (5) côté arbre, comprenant au moins deux buses d'alimentation creuses (14) débouchant respectivement dans une seconde structure de canal (15) côté goupille planétaire pour alimenter le lubrifiant dans la seconde structure de canal (15) respective, **caractérisée en ce qu'**une buse d'alimentation (14) positionnée plus près de l'embouchure du canal (5), vu dans la direction périphérique, présente une section transversale d'ouverture (Q1) plus petite qu'une buse d'alimentation (14) positionnée plus loin.

2. Boîte de vitesses à trains épicycloïdaux selon la revendication 1, **caractérisée en ce que** les buses d'alimentation (14) présentent respectivement un alésage (20), dans laquelle le diamètre de l'alésage est différent permettant de modifier la section transversale d'ouverture (Q1, Q2).

3. Boîte de vitesses à trains épicycloïdaux selon la revendication 1, **caractérisée en ce qu'**une ou plusieurs buses d'alimentation (14) présentent un diaphragme (21) réduisant la section transversale d'ouverture (Q1, Q2) et disposé à l'extrémité ouverte de la buse d'alimentation (14) vers l'espace de collecte (19).

4. Boîte de vitesses à trains épicycloïdaux selon l'une des revendications précédentes, **caractérisée en ce que** le porte-satellites (6) présente une joue (10) s'étendant radialement par rapport à l'arbre (2), par laquelle il est relié à l'arbre (2) et à laquelle se raccorde un fond (13) annulaire, sur lequel les buses d'alimentation (14) font saillie axialement.

5. Boîte de vitesses à trains épicycloïdaux selon la revendication 4, **caractérisée en ce que** la joue (10) présente une structure conductrice de lubrifiant sur le côté orienté vers le plateau collecteur de lubrifiant (12).

6. Boîte de vitesses à trains épicycloïdaux selon l'une des revendications précédentes, **caractérisée en ce que** l'espace de collecte (19) annulaire est plus large en direction radiale ou plus haut en direction axiale dans la zone de la buse d'alimentation (14) présentant une section transversale d'ouverture (Q1) plus petite que dans la zone d'une buse d'alimentation (14) présentant une section transversale d'ouverture (Q2) plus grande.

7. Plateau collecteur de lubrifiant pour une boîte de vitesses à trains épicycloïdaux (1) selon l'une des revendications précédentes, comprenant un espace de collecte (19) délimité par un fond (13) ainsi qu'au moins deux buses d'alimentation (14) creuses faisant saillie axialement du fond (13) et communiquant avec l'espace de collecte (19), **caractérisé en ce que** les buses d'alimentation (14) présentent au moins en partie différentes sections transversales d'ouverture (Q1, Q2).

8. Plateau collecteur de lubrifiant selon la revendication 7, **caractérisé en ce que** les buses d'alimentation (14) présentent respectivement un alésage (20), dans lequel le diamètre de l'alésage est différent permettant de modifier la section transversale d'ouverture.

9. Plateau collecteur de lubrifiant selon la revendication 7, **caractérisé en ce qu'**une ou plusieurs buses d'alimentation (14) présentent un diaphragme (21) réduisant la section transversale d'écoulement et disposé à l'extrémité ouverte de la buse d'alimentation (14) vers l'espace de collecte (19).

10. Plateau collecteur de lubrifiant selon l'une des revendications 7 à 9, **caractérisé en ce que** l'espace de collecte (19) annulaire est plus large dans la direction radiale ou plus haut dans la direction axiale dans la zone de la buse d'alimentation (14) présentant une section transversale d'ouverture (Q1) plus petite que dans la zone d'une buse d'alimentation (14) présentant une section transversale d'ouverture (Q2) plus grande.
